# EUROPEAN PATENT SPECIFICATION

(11) **EP 0 916 551 B1**
(45) Date of publication and mention of the grant of the patent: **12.11.2003**
(21) Application number: 98500246.8
(22) Date of filing: 12.11.1998
(51) Int. Cl.: B60R 13/02

(54) **Vehicle interior panel**
Fahrzeuginnenplatte
Panneau intérieur pour véhicule

(30) Priority: 14.11.1997 ES 9702388
(43) Date of publication of application: 19.05.1999
(73) Proprietor: GRUPO ANTOLIN-INGENIERIA, S.A., 09080 Burgos (ES)
(72) Inventor: Morales Gallo, Francisco, 09003 Burgos (ES)
(74) Representative: Urteaga Simarro, José Antonio

(56) References cited:
- DE-A- 3 808 727
- FR-A- 2 533 181
- US-A- 4 556 204
- US-A- 5 111 619
- US-A- 5 224 299
- US-A- 5 535 571

## Description

This invention relates to a vehicle interior panel, generally for installation in doors or similar items, of the type which are produced based on several fibres, e.g. wood fibres, and hot moulded.

Panels of this type are usually provided with projecting or curved areas along their surface area, with specific functions of the panel itself being carried out by means of these areas. However, during the cooling of the panel after the moulding process, deformations of the material take place that alter the design tolerances and make it difficult to fit the panel into the door correctly.

A vehicle interior panel according to the preamble of claim 1 is known from US-A-5 535 571.

One object of the invention is to provide a vehicle interior panel that prevents the panel from becoming deformed during cooling.

Another object of the invention is to provide a vehicle interior panel that allows tolerances for assembly to be reduced.

Another object of the invention is to provide a vehicle interior panel that provides greater stability tom the panel.

Another object of the invention is to provide a vehicle interior panel that does not require the fitting of any type of external reinforcing.

These objectives are achieved by a vehicle interior panel according to claim 1.

The dependent claims show prefered embodiments of the invention.

The details of the invention will be appreciated in greater detail on the sheet of drawings which is attached, in which the following are represented for guidance purposes only.
- Figure 1 is a perspective of a vehicle panel according to the invention.
- Figure 2 is the rear view, according to M, of Figure 1.
- Figure 3 is a vertical cross section of the panel, that shows a variant of the invention.
- Figure 4 is a partial vertical cross section, showing a detail of the ribs.
- Figure 5 shows the preferred solution for the ribs in a transverse cross section of these ribs.
- Figure 6 represents another possible solution for the ribs, in accordance with the invention.

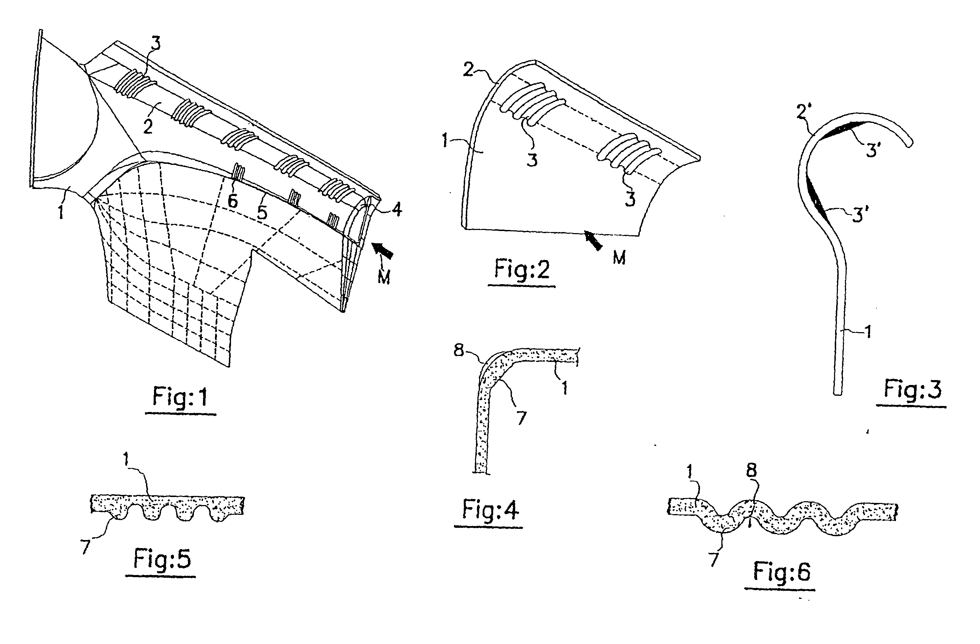

Looking now at Figure 1, we can observe the panel (1), in which two projecting areas (2, 5) are appreciated, with unitary groups of ribs (3, 6) being made in these projecting areas. These ribs extend in a transversal direction from the front part to the rear (4). In this case, the ribs (3) in the projecting area (2) are distributed regularly throughout its alignment and the ribs (6) in the projecting area (5) are distributed irregularly through it. Obviously, the free spaces between the groups of ribs (3) which can be appreciated, equally spaced in the projecting area (2), could very well be different, while the spaces between the groups of ribs (6) in the projecting area (5), which are shown spaced at different intervals, could be perfectly equal to each other.

The unitary groups of ribs (3, 6) are usually proposed in undulated form, with a recess followed by a protuberance and vice versa.

In the detail shown in Figure 2, we can see a section of the panel (1) and a portion of the projecting area (2), indicated by means of a dotted line for a better understanding of the concept of the invention. In this case, the ribs (3) protrude towards the non-visible side of the panel, as indicated in the transverse cross-section represented in Figure 5, according to which, and as can be cheked, the protuberances (7) of the ribs only protrude towards one of the sides of the panel.

This solution, is the preferential one among those covered by the invention, as it leaves the visible side free of any mark or signal, allowing the final coating of the panel to be fitted without the ribs affecting (pulling off) this coating.

In other cases, for instance the one shown in Figure 6, protuberances (7) and the recesses (8) of the ribs protrude outwards towards both sides of the panel. This solution can be applied in cases with a lower necessity as regards the aesthetic appearance of the panel.

From Figure 4 we deduce a view of one side of a cross section of a panel (1) in the plane of the ribs, also in accordance with Figure 6, in which a recess (8) and a protuberance (7) in the said group of ribs can be appreciated.

In the same way, from Figure 3 we deduce the possibility, also covered by the invention, of carrying out more than one alignment of ribs (3, 3') in each projecting area (2'). Two are shown in the case in the drawing.

In each case, in order to achieve the improvement that the invention provides the ribs will be adapted in height and lenght for each specific case.

## Claims

1. Vehicle interior panel having a visible and a non-visible side when mounted, the panel including projecting or curved areas (2, 5) along its surface area, and ribs (3) extend in a direction transverse to the longitudinal direction of the projecting areas (2,5), occupying the transverse length of said projection areas (2,5) at least partially, and protruding at least from the non-visible surface of the panel, **characterised in that** said ribs (3) are formed in unitary groups of ribs (3).

2. Vehicle interior panel, in accordance with claim 1, **characterised in that** the alternate recesses and protuberances that give rise to ribs (3) extending towards both sides of the panel.

3. Vehicle interior panel, in accordance with claims 1 and 2, **characterised in that** the ribs (3) occupy the whole transvers length of the projecting areas (2, 5) of the panel.

4. Vehicle interior panel, in accordance with claims 1 and 2, **characterised in that** the unitary groups of ribs (3) are alternating with flat spaces throughout the projecting areas.

5. Vehicle interior panel, in accordance with claim 4 **characterised in that** the flat spaces between the groups of ribs are equal to each other.

6. Vehicle interior panel, in accordance with claim 4 **characterised in that** the flat spaces between the groups of ribs are different from each other.

7. Vehicle interior panel, in accordance with the previous claims, **characterised in that** more then one alignment of the unitary groups of ribs are carried out in each projecting area.

## Patentansprüche

1. Fahrzeuginnenverkleidung, die im montierten Zustand eine sichtbare und eine unsichtbare Seite hat, wobei die Verkleidung entlang ihrer Oberfläche vorspringende oder gebogene Bereiche (2,5) und Rippen (3) aufweist, die sich quer zur Längsrichtung der vorspringenden Bereiche (2,5) ausbreiten, wobei die Querlänge dieser Vorsprungsbereiche (2,5) wenigstens teilweise eingenommen wird und sie wenigstens von der unsichtbaren Seite der Verkleidung hervorragen. Sie kennzeichnet sich dadurch, dass besagte Rippen (3) in einheitlichen Rippengruppen (3) gebildet werden.

2. Fahrzeuginnenverkleidung gemäß Patentanspruch 1, die sich **dadurch kennzeichnet, dass** sich die abwechselnden Vertiefungen und Vorsprünge, die den Rippen (3) Höhe geben, zu beiden Seiten der Verkleidung hin erstrecken.

3. Fahrzeuginnenverkleidung gemäß Patentanspruch 1 und 2, die sich **dadurch kennzeichnet, dass** die Rippen (3) die ganze Querlänge der vorspringenden Bereiche (2,5) der Verkleidung einnehmen.

4. Fahrzeuginnenverkleidung gemäß Patentanspruch 1 und 2, die sich **dadurch kennzeichnet, dass** sich die einheitlichen Rippengruppen (3) über die vorspringenden Bereiche mit flachen Räumen abwechseln.

5. Fahrzeuginnenverkleidung gemäß Patentanspruch 4, die sich **dadurch kennzeichnet, dass** die flachen Räume zwischen den Rippengruppen zueinander gleich sind.

6. Fahrzeuginnenverkleidung gemäß Patentanspruch 4, die sich **dadurch kennzeichnet, dass** die flachen Räume zwischen den Rippengruppen voneinander verschieden sind.

7. Fahrzeuginnenverkleidung gemäß der vorherigen Patentansprüche, die sich **dadurch kennzeichnet, dass** in jedem vorspringenden Bereich mehr als eine Ausrichtung der einheitlichen Rippengruppen ausgeführt ist.

## Revendications

1. Panneau intérieur pour véhicule, avec un côté visible et un côté invisible lorsqu'il est monté ; le panneau comprenant des zones de projection ou courbes (2, 5) sur sa surface, et des nervures qui s'étendent en travers de la longueur des zones de projection (2, 5), occupant la longueur transversale des zones de projection précitées (2, 5), au moins partiellement, et dépassant au moins de la surface invisible du panneau, **caractérisé par le fait que** les rainures citées (3) sont regroupées en groupes unitaires de rainures (3).

2. Panneau intérieur pour véhicule, conformément à la revendication 1, **caractérisé par le fait que** les bosses et les creux qui forment les rainures (3) s'étendent vers les deux côtés du panneau.

3. Panneau intérieur pour véhicule, conformément aux revendications 1 et 2, **caractérisé par le fait que** les rainures (3) occupent la totalité de la longueur transversale des zones de projection (2, 5) du panneau.

4. Panneau intérieur pour véhicule, conformément aux revendications 1 et 2, **caractérisé par le fait que** les groupes unitaires dé rainures (3) sont posés en alternance avec des espaces plats dans les zones de projection.

5. Panneau intérieur pour véhicule, conformément à la revendication 4, **caractérisé par le fait que** les espaces plats entre les groupes de rainures sont tous égaux.

6. Panneau intérieur pour véhicule, conformément à la revendication 4, **caractérisé par le fait que** les espaces plats entre les groupes de rainures sont différents les uns des autres.

7. Panneau intérieur pour véhicule, conformément aux revendications précédentes, **caractérisé par le fait qu'**un alignement des groupes unitaires de rainures est porté dans chaque zone de projection.
